# EUROPEAN PATENT APPLICATION

(11) **EP 3 481 090 A1**
(43) Date of publication of application: **08.05.2019**
(21) Application number: 17862390.6
(22) Date of filing: 21.09.2017
(51) Int. Cl.: H04W 12/04

(54) **METHOD AND SYSTEM FOR ACCESSING WIRELESS NETWORK BY SMART DEVICE**

(30) Priority: 19.10.2016 CN 201610909700
(71) Applicant: Shenzhen Sendis Semiconductor Co., Ltd, Shenzhen, Guangdong 518000 (CN)
(72) Inventor: MAI, Yanquan, Shenzhen Guangdong 518000 (CN); WANG, Wenpan, Shenzhen Guangdong 518000 (CN); DENG, Xunsheng, Shenzhen Guangdong 518000 (CN); CHEN, Bo, Shenzhen Guangdong 518000 (CN); CHEN, Xiaoyu, Shenzhen Guangdong 518000 (CN)
(74) Representative: Winter, Brandl, Fürniss, Hübner, Röss, Kaiser, Polte - Partnerschaft mbB
(86) International application number: PCT/CN2017/102700
(87) International publication number: WO 2018/072592

(57) **Abstract**

Disclosed in the present invention are a method and system for accessing a wireless network by a smart device. Smart device generates a temporary data packet comprising a temporary key, which is transmitted by light blinking, thereby greatly improving the confidentiality of data transmission. A controller detects a blinking optical signal sent by the smart device through a photosensitive component of the controller, and performs parsing to obtain a temporary data packet; the controller encrypts network information of a wireless network by using a temporary key, and sends to smart device through wireless network; the smart device decrypts the network information after receiving, obtains a long-term key after performing operation on network information, encrypting communication by using long-term key, and adding encrypted communication into wireless network. In this way, confidentiality for accessing wireless network by smart device is greatly improved.

## Description

### FIELD OF THE INVENTION

The present invention relates to the field of communication technologies, and more particularly, to a method and a system for accessing a wireless network by a smart device.

### BACKGROUND

In a conventional technical protocol, a smart device usually has a unique key or a same key set in a production process, and stored in the smart device; after a user has bought such a product, he obtains and inputs the key into a cell phone or a remote controller before pairing, and only after pairing successfully, is the smart device able to establish a secure link with the remote controller or the cell phone, that is, after a pairing operation is completed by using an initial temporary key, the smart device and the remote controller have a long-term key agreed in between, before encrypting a communication by the long-term key for a subsequent remote controller. This process is often referred to as a long-term key distribution (LTK).

Since a plurality of smart devices generally have no buttons or screens, or a smart light, when a user wants to obtain a key of a device, he can get it only through a label in a manual or on an outer packet box, generated by a two-dimensional code or a serial number. Such a method has increased a complexity of a production process and a production cost, causing easily a key loss and a security risk.

Therefore, the current technology needs to be improved and developed.

### BRIEF SUMMARY OF THE DISCLOSURE

According to the defects of the prior art described above, the purpose of the present invention is providing a method and a system for accessing a wireless network by a smart device, in order to improving a security of the smart device connecting to the wireless network.

In order to achieve the above mentioned goals, the technical solution of the present invention to solve the technical problems is as follows:
A method for accessing a wireless network by a smart device, comprising:
A. the smart device generates a temporary data packet comprising a temporary key, and a light emitting component thereof transmits the temporary data packet to a controller in a manner of light blinking;
B. the controller detects a blinking optical signal sent by the smart device by means of a photosensitive component thereof, performs parsing to obtain the temporary data packet; the controller encrypts a network information of a wireless network by using the temporary key in the temporary data packet, and transmits the network information encrypted to the smart device through the wireless network;
C. the smart device decrypts and obtains the network information; and obtains a long-term key after performing operations to the network information, before joining the wireless network.

The method for accessing the wireless network by the smart device, wherein the step A comprises specifically:
A1. the smart device generates a piece of verification data and a temporary data packet comprising a temporary key; or, the smart device generates a temporary data packet comprising a piece of verification data and a temporary key;
A2. the smart device transmits a device address thereof and the verification data through the wireless network; while a light-emitting component thereof flashes at a frequency that is invisible to a human eye, and transmits the temporary data packet in a manner of light blinking.

The method for accessing the wireless network by the smart device, wherein the temporary data packet further comprises a synchronization word and a device address of the smart device.

The method for accessing the wireless network by the smart device, wherein the step B comprises:
the controller receives the verification data through the wireless network, senses the smart device blinking by a photosensitive component thereof, and receives a subsequent device address and a temporary key after detecting the synchronization word; and sends a plurality of data packets to the smart device corresponding to the device address through the wireless network, the data packets include the verification data encrypted by the temporary key and a ciphertext of network information of the wireless network.

The method for accessing the wireless network by the smart device, wherein the step C comprises specifically: the smart device receives the data packets sent by the controller, decrypts the data packets by using the temporary key, and saves a decrypted network information only after decrypting and achieving the verification data; obtains a long-term key after performing an operation on the network information according to a predetermined algorithm, before joining the wireless network where the controller is located, and communicating with a plurality of devices in the wireless network through the long-term key.

A system for accessing a wireless network by a smart device, wherein the system comprises:
a smart device, applied to generating a temporary data packet comprising a temporary key, and a light emitting component thereof transmitting the temporary data packet to a controller in a manner of light blinking; after receiving a network information sent by the controller, decrypting and obtaining the network information; and obtaining a long-term key after performing operations to the network information, before joining the wireless network;
a controller, applied to detecting a blinking optical signal sent by the smart device by means of a photosensitive component thereof, performing parsing to obtain the temporary data packet; encrypting a network information of the wireless network by using the temporary key in the temporary data packet, and transmits the network information encrypted to the smart device through the wireless network.

The system for accessing the wireless network by the smart device, wherein the temporary data packet further comprises a synchronization word and a device address of the smart device.

The system for accessing the wireless network by the smart device, wherein the smart device comprises:
a data generating module, applied to generating a piece of verification data and a temporary data packet comprising a temporary key; or generating a temporary data packet comprising a piece of verification data and a temporary key;
a first communication module, applied to broadcasting a device address of the smart device and the varication data;
a light-emitting component, applied to flashing at a frequency that is invisible to a human eye, and transmitting the temporary data packet in a manner of light blinking.

The system for accessing the wireless network by the smart device, wherein the controller comprises:
a second communication module, applied to receiving the verification data; and sending a plurality of data packets to the smart device corresponding to the device address, after a photosensitive component receives a device address and a temporary key of the smart device; the data packets include the verification data encrypted by the temporary key and a ciphertext of network information of the wireless network;
the photosensitive component, applied to sensing the smart device blinking, and only after detecting the synchronization word, receiving a subsequent device address and a temporary key.

The system for accessing the wireless network by the smart device, wherein the first communication module is further applied to receiving the data packets sent by the controller; the smart device further comprises a decryption module, applied to decrypting the data packets by using the temporary key, and saving a decrypted network information only after decrypting and achieving the verification data; obtaining a long-term key after performing an operation on the network information according to a predetermined algorithm, before joining the wireless network where the controller is located, and communicating with a plurality of devices in the wireless network through the long-term key.

Comparing to the prior art, the present invention provides a method and system for accessing a wireless network by a smart device. The smart device generates a temporary data packet comprising a temporary key, and the temporary data packet is transmitted in a manner of light blinking, thereby greatly improving the confidentiality of data transmission. A controller detects a blinking optical signal sent by the smart device by means of a photosensitive component thereof, and performs parsing to obtain a temporary data packet; the controller encrypts network information of a wireless network by using a temporary key, and sends an encrypted network information to the smart device through the wireless network; and the smart device decrypts the network information, after receiving the network information, obtains a long-term key after the smart device performs operation on the network information, encrypts the communication by using the long-term key, and joins into the wireless network. Thus, the confidentiality for accessing the wireless network by the smart device is greatly improved.

### BRIEF DESCRIPTION OF THE DRAWINGS

Figure 1 illustrates a flow chart on a method for a smart device accessing to a wireless network as provided by the present invention.
Figure 2 illustrates a waveform diagram on a blinking brightness in the method for the smart device accessing to the wireless network as provided by the present invention.
Figure 3 illustrates a schematic diagram on an interaction process between a Bluetooth smart light and a cell phone in the method for the smart device accessing to the wireless network as provided by the present invention.
Figure 4 illustrates a structural block diagram of a system for the smart device accessing to the wireless network as provided by the present invention.

### DETAILED DESCRIPTION OF EMBODIMENTS

The present invention provides a method and system for accessing a wireless network by a smart device. In order to make the purpose, technical solution and the advantages of the present invention clearer and more explicit, further detailed descriptions of the present invention are stated here, referencing to the attached drawings and some embodiments of the present invention. It should be understood that the detailed embodiments of the invention described here are used to explain the present invention only, instead of limiting the present invention.

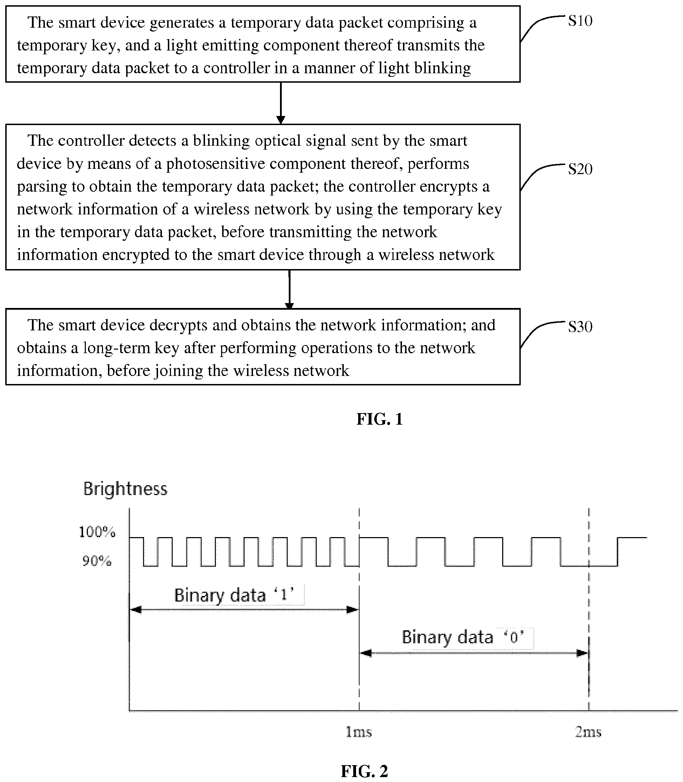

The present invention provides a method for accessing a wireless network by a smart device, referencing to FIG. 1, the method comprises a plurality of following steps:
S10. The smart device generates a temporary data packet comprising a temporary key, and a light emitting component thereof transmits the temporary data packet to a controller in a manner of light blinking. By generating the temporary key randomly, a confidentiality is improved; in a way of a light emitting component blinking, using a light to transmit the temporary key, the confidentiality and a security of a communication is further improved. Wherein, the temporary data packet further comprises a synchronization word and a device address of the smart device; a content of the temporary data packet may not be the synchronization word, the device address or the temporary key itself, it may be a data after a certain method of translation, and when the controller receives the data, an anti-translation will be performed to obtain the temporary key. Of course, in other embodiments, the device address may not be included. The light emitting component sends out one of a visible light, an infrared light and an ultrasonic, when it is the ultrasonic, the light emitting component should be a sound-emitting component. In the present embodiment, the temporary key is a random temporary key, that is, the smart device generates a temporary data packet comprising a random temporary key.
S20. The controller detects a blinking optical signal sent by the smart device by means of a photosensitive component thereof, performs parsing to obtain the temporary data packet; the controller encrypts a network information of a wireless network by using the temporary key in the temporary data packet, before transmitting the network information encrypted to the smart device through a wireless transmission protocol that the wireless network is based on. The network information comprises a network ID, a network password and more of the wireless network.
S30. The smart device decrypts and obtains the network information; and obtains a long-term key after performing operations to the network information, before joining the wireless network where the controller is located, and communicating with the controller and a plurality of other devices in the wireless network through the long-term key.

Therefore, when the smart device connects to the wireless network, there is no need to manually input the password, nor scan a two dimension code or a label; a cost of the smart device will not be increased. An optical communication may be performed by using an existing light-emitting component of the smart devices, which greatly improves the confidentiality of the data transmission and access.

Further, the step S10 comprises specifically a plurality of following steps:
S110, the smart device generates a piece of verification data and a temporary data packet comprising a temporary key, specifically, after the smart device is powered on, a piece of verification data and a temporary data packet comprising a temporary key are generated. Or, in a plurality of other embodiments, the step S110 may also be: after the smart device is powered on, a temporary data packet comprising a piece of verification data and a temporary key is generated. The smart device includes a smart phone, a tablet computer, a smart wearable device, and a Bluetooth smart light. In the present embodiment, it is the Bluetooth smart light. The verification data is one of a random data, a fixed data and a data generated by a certain algorithm, and in the present embodiment, it is the random data.
S120. The smart device transmits a device address thereof and the verification data through the wireless network; while a light-emitting component thereof flashes at a frequency that is invisible to a human eye, and transmits the temporary data packet in a manner of light blinking. Of course, in a plurality of other embodiments, the device address may not be included. The wireless network is a radio frequency communication network, including a WIFI, a Bluetooth, a zigbee, a z-wave, an infrared light, an ultrasonic, a private protocol 2.4G communication and more. The smart device selects the Bluetooth or the WIFI or the infrared light or the ultrasonic or the zigbee or the z-wave or the 2.4G communication for communication according to a plurality of hardware characteristics thereof. For example, a smart phone may use the Bluetooth or the WIFI, a remote controller may use the infrared light and more. In the present embodiment, the Bluetooth smart light uses the Bluetooth to broadcast the device address and the verification data thereof.

The flashes at the frequency that is invisible to the human eye is a frequency greater than 72 Hz. In the present embodiment, a light of the Bluetooth smart light flashes alternately with a first brightness and a second brightness, while a duty ratio of both is 50%. A first blinking frequency is defined to represent a binary code 1, a second blinking frequency is defined to represent a binary code 0, and 1 bit of data is transmitted in 1 ms. In such a way, the Bluetooth smart light transmits the temporary data packets. The first brightness and the second brightness are different, and preferably, the first brightness is 100% of the brightness and the second brightness is 90% of the brightness. The second blinking frequency is 1/2 of the first blinking frequency. Preferably, the first blinking frequency is 8kHz and the second blinking frequency is 4kHz. In the present invention, a relationship between the brightness of the blinking and time is as shown in the FIG.2. A non-illuminated smart device may also achieve a process above by means of using an indicator light or an LED light on the device.

Of course, in a plurality of other embodiments, a modulation mode of transmitting data by blinking may also have a plurality of other forms, such as a Form 1: increasing a plurality of different blinking frequencies to indicate more data, for example, still using 1ms to represent a data, while a 4kHz represents 2 bits of a binary data 2 'b00, and a 5 kHz represents 2 bits of a binary data 2'b01, a 6 kHz represents 2 bits of a binary data 2'b10, and a 7 kHz represents 2 bits of a binary data 2'b11 and the like. A Form 2: representing the data according to a time length of holding a 50% brightness in 2ms. For example, if the time length of holding the 50% brightness in 2ms is less than 0.5ms, while in other time, the brightness is 100%, that represents a binary number of 1, otherwise the time length of holding the 50% brightness in 2ms is more than 0.5ms, while in other time, the brightness is 100%, that represents a binary number of 0.

Further, the step S20 comprises: the controller receives the verification data through the wireless network accordingly, and senses the smart device blinking by a photosensitive component thereof. The controller includes a smart phone, a tablet computer, a smart wearable device, a remote controller and more, preferably, in the present embodiment, it is a cell phone. The controller checks the synchronization word first, and only receives the device address and the temporary key subsequently after detecting the synchronization word, so as to ensure an integrity and a security of the device address and the temporary key; and sends a plurality of data packets to the smart device corresponding to the device address through the wireless network, the data packets include the verification data encrypted by the temporary key and a ciphertext of network information of the wireless network; in other words, the controller encrypts the verification data and the network information by using the temporary key, and sends the ciphertext encrypted to the smart device through the wireless network. The smart device and the controller encrypt and decrypt in the previous data transmission by using the temporary key, which improves a confidentiality of the data transmission.

In the present embodiment, the photosensitive component is a camera or a light sensor.

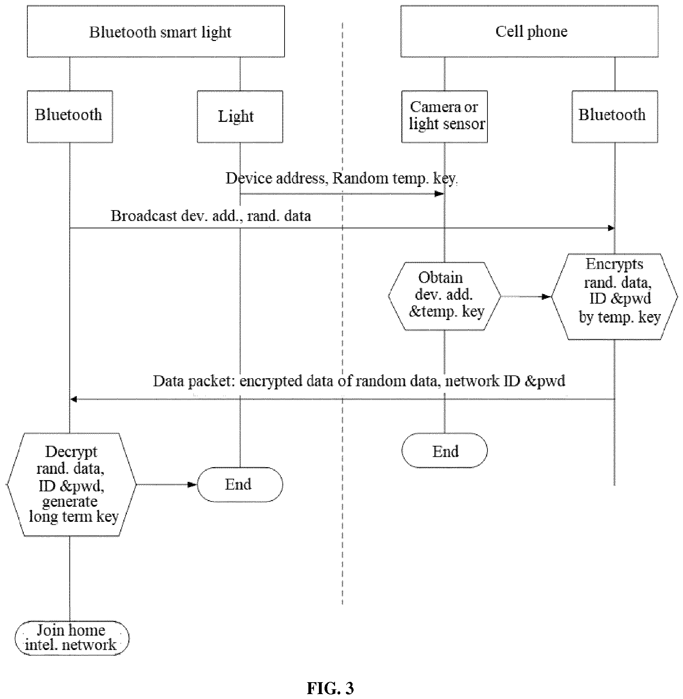

Further, the step S30 comprises specifically: the smart device receives the data packets sent by the controller, decrypts the data packets by using the temporary key, and saves a decrypted network information only after decrypting and achieving the verification data; obtains a long-term key after performing an operation on the network information according to a predetermined algorithm, before joining the wireless network where the controller is located, and communicating with a plurality of devices in the wireless network through the long-term key. The smart device generates a verification data, and sends to the controller, and only after receiving the verification data fed back by the controller, will the smart device respond to a connection request by the controller, that avoids a control to the smart device by any illegal controllers, and improves a recognition of the controller, thus improves the security and the confidentiality of the communication with the controller. The wireless network is preferred to be a home intelligent network. In the present invention, an interaction process between the Bluetooth smart light and the cell phone is shown as FIG. 3.

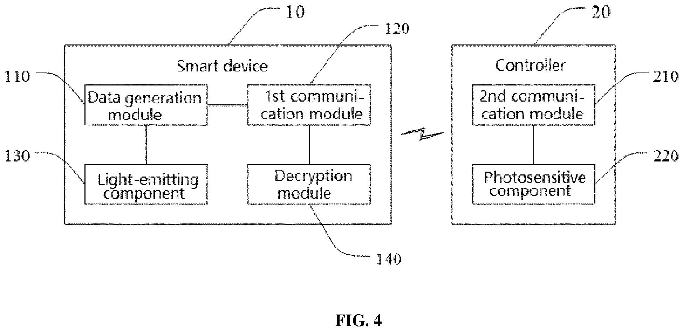

According to the method for accessing the wireless network by the smart device as provide by the embodiments above, the present invention further provides a system for accessing the wireless network by the smart device. Referencing to FIG. 4, the system comprises a smart device 10 and a controller 20.

The smart device 10, applied to generating a temporary data packet comprising a temporary key, and a light emitting component thereof transmitting the temporary data packet to a controller in a manner of light blinking; after receiving a network information sent by the controller, decrypting and obtaining the network information; and obtaining a long-term key after performing operations to the network information, before joining the wireless network, and communicating with the controller and other devices in the wireless network through the long-term key. The temporary data packet further comprises a synchronization word and a device address of the smart device; a content of the temporary data packet may not be the synchronization word, the device address or the temporary key itself, it may be a data after a certain method of translation, and when the controller receives the data, an anti-translation will be performed to obtain the temporary key. Of course, in other embodiments, the device address may not be included. In the present embodiment, the temporary key is a random temporary key, that is, the smart device 10 generates a temporary data packet comprising a random temporary key.

The controller 20, applied to detecting a blinking optical signal sent by the smart device 10 by means of a photosensitive component thereof, performing parsing to obtain the temporary data packet; encrypting a network information of the wireless network by using the temporary key in the temporary data packet, and transmits the network information encrypted to the smart device 10 through the wireless network. The network information comprises a network ID, a network password and more of the wireless network.

Therefore, when the smart device connects to the wireless network, there is no need to manually input the password, nor scan a two dimension code or a label; a cost of the smart device will not be increased. An optical communication may be performed by using an existing light-emitting component of the smart devices, which greatly improves the confidentiality of the data transmission and access.

Further, the smart device 10 comprises a data generating module 110, a first communication module 120, a light-emitting component 130 and a decryption module 140.

The data generating module 110, is applied to generating a piece of verification data and a temporary data packet comprising a random temporary key, after the smart device 10 is powered on. The smart device comprises a smart phone, a tablet computer, an intelligent wearable device and a Bluetooth smart light, in the present embodiment, it is a Bluetooth smart light.

The first communication module 120, is applied to broadcasting a device address of the smart device and the varication data. The first communication module 120 is further applied to receiving a data packet sent by the controller 20. The first communication module 120 is one of a Bluetooth module, a WIFI module, an infrared light module, an ultrasonic module, a zigbee module, a z-wave module, and a 2.4G communication module. In the present embodiment, the first communication module 120 is the Bluetooth module.

The light-emitting component 130, is applied to flashing at a frequency that is invisible to a human eye, and transmitting the temporary data packet in a manner of light blinking. The flashing at a frequency that is invisible to a human eye is at a frequency larger than 72Hz.

The decryption module 140, is applied to decrypting the data packet by using the temporary key, and saving the decrypted network information only after decrypting and achieving the verification data; obtaining a long-term key after performing an operation on the network information according to a predetermined algorithm, before joining the wireless network where the controller 20 is located, and communicating with a plurality of devices in the wireless network through the long-term key.

Further, the controller 20 comprises a smart phone, a tablet computer, an intelligent wearable device, a remote controller and more, preferably, in the present embodiment, it is a cell phone. The controller comprises a second communication module 210 and a photosensitive component 220.

The second communication module 220 is applied to receiving the verification data; and sending a plurality of data packets to the smart device 10 corresponding to the device address, after the photosensitive component 220 receives a device address and a temporary key of the smart device; the data packets include the verification data encrypted by the temporary key and a ciphertext of network information of the wireless network. Corresponding to the first communication module 120, the second communication module 210 is one of the Bluetooth module, the WIFI module, the infrared light module, the ultrasonic module, the zigbee module, the z-wave module, and the 2.4G communication module. In the present embodiment, the second communication module 210 is the Bluetooth module.

The photosensitive component 220 is applied to sensing the smart device 10 blinking, and only after detecting the synchronization word, receiving the subsequent device address and the temporary key, so as to ensure an integrity and a security of the device address and the temporary key. In the present embodiment, the photosensitive component 220 is a camera or a light sensor. The smart device 10 and the controller 20 adopt the temporary key to encrypt and decrypt in the previous data transmission by using the temporary key, which improves a confidentiality of the data transmission.

It should be understood that, the application of the present invention is not limited to the above examples listed. Ordinary technical personnel in this field can improve or change the applications according to the above descriptions, all of these improvements and transforms should belong to the scope of protection in the appended claims of the present invention.

## Claims

1. A method for accessing a wireless network by a smart device, comprising a plurality of following steps:
A. the smart device generates a temporary data packet comprising a temporary key, and a light emitting component thereof transmits the temporary data packet to a controller in a manner of light blinking;
B. the controller detects a blinking optical signal sent by the smart device by means of a photosensitive component thereof, performs parsing to obtain the temporary data packet; the controller encrypts a network information of a wireless network by using the temporary key in the temporary data packet, and transmits the network information encrypted to the smart device through the wireless network;
C. the smart device decrypts and obtains the network information; and obtains a long-term key after performing operations to the network information, before joining the wireless network.

2. The method for accessing the wireless network by the smart device according to claim 1, wherein the step A comprises specifically:
A1. the smart device generates a piece of verification data and a temporary data packet comprising a temporary key; or, the smart device generates a temporary data packet comprising a piece of verification data and a temporary key;
A2. the smart device transmits a device address thereof and the verification data through the wireless network; while a light-emitting component thereof flashes at a frequency that is invisible to a human eye, and transmits the temporary data packet in a manner of light blinking.

3. The method for accessing the wireless network by the smart device according to claim 2, wherein the temporary data packet further comprises a synchronization word and a device address of the smart device.

4. The method for accessing the wireless network by the smart device according to claim 3, wherein the step B comprises: the controller receives the verification data through the wireless network, senses the smart device blinking by a photosensitive component thereof, and receives a subsequent device address and a temporary key after detecting the synchronization word; and sends a plurality of data packets to the smart device corresponding to the device address through the wireless network, the data packets include the verification data encrypted by the temporary key and a ciphertext of network information of the wireless network.

5. The method for accessing the wireless network by the smart device according to claim 4, wherein the step C comprises specifically: the smart device receives the data packets sent by the controller, decrypts the data packets by using the temporary key, and saves a decrypted network information only after decrypting and achieving the verification data; obtains a long-term key after performing an operation on the network information according to a predetermined algorithm, before joining the wireless network where the controller is located, and communicating with a plurality of devices in the wireless network through the long-term key.

6. A system for accessing a wireless network by a smart device, wherein the system comprises:
a smart device, applied to generating a temporary data packet comprising a temporary key, and a light emitting component thereof transmitting the temporary data packet to a controller in a manner of light blinking; after receiving a network information sent by the controller, decrypting and obtaining the network information; and obtaining a long-term key after performing operations to the network information, before joining the wireless network;
a controller, applied to detecting a blinking optical signal sent by the smart device by means of a photosensitive component thereof, performing parsing to obtain the temporary data packet; encrypting a network information of the wireless network by using the temporary key in the temporary data packet, and transmits the network information encrypted to the smart device through the wireless network.

7. The system for accessing the wireless network by the smart device according to claim 6, wherein the temporary data packet further comprises a synchronization word and a device address of the smart device.

8. The system for accessing the wireless network by the smart device according to claim 7, wherein the smart device comprises:
a data generating module, applied to generating a piece of verification data and a temporary data packet comprising a temporary key; or generating a temporary data packet comprising a piece of verification data and a temporary key;
a first communication module, applied to broadcasting a device address of the smart device and the varication data;
a light-emitting component, applied to flashing at a frequency that is invisible to a human eye, and transmitting the temporary data packet in a manner of light blinking.

9. The system for accessing the wireless network by the smart device according to claim 8, wherein the controller comprises:
a second communication module, applied to receiving the verification data; and sending a plurality of data packets to the smart device corresponding to the device address, after a photosensitive component receives a device address and a temporary key of the smart device; the data packets include the verification data encrypted by the temporary key and a ciphertext of network information of the wireless network;
the photosensitive component, applied to sensing the smart device blinking, and only after detecting the synchronization word, receiving a subsequent device address and a temporary key.

10. The system for accessing the wireless network by the smart device according to claim 9, wherein the first communication module is further applied to receiving the data packets sent by the controller; the smart device further comprises a decryption module, applied to decrypting the data packets by using the temporary key, and saving a decrypted network information only after decrypting and achieving the verification data; obtaining a long-term key after performing an operation on the network information according to a predetermined algorithm, before joining the wireless network where the controller is located, and communicating with a plurality of devices in the wireless network through the long-term key.
